# EUROPÄISCHE PATENTSCHRIFT

(11) **EP 4 033 113 B1**
(45) Veröffentlichungstag und Bekanntmachung des Hinweises auf die Patenterteilung: **03.07.2024**
(21) Anmeldenummer: 21217677.0
(22) Anmeldetag: 24.12.2021
(51) Int. Cl.: F16B 37/06, F16B 19/08

(54) **SELBSTSTANZENDES FUNKTIONSELEMENT, ZUSAMMENBAUTEIL UND VERFAHREN ZUR HERSTELLUNG EINES ZUSAMMENBAUTEILS**
SELF-STAMPING FUNCTIONAL ELEMENT, COMPOSITE COMPONENT AND METHOD FOR PRODUCING A COMPOSITE COMPONENT
ÉLÉMENT FONCTIONNEL D'AUTO-POINÇONNAGE, PIÈCE D'ASSEMBLAGE ET PROCÉDÉ DE FABRICATION D'UNE PIÈCE D'ASSEMBLAGE

(30) Priorität: 22.01.2021 DE 102021101366
(43) Veröffentlichungstag der Anmeldung: 27.07.2022
(73) Patentinhaber: Profil Verbindungstechnik GmbH & Co. KG, 61381 Friedrichsdorf (DE)
(72) Erfinder: Sowa, Christian, 63165 Mühlheim/Main (DE); Jene, Tobias, 61381 Friedrichsdorf (DE); Mahlme, Amer, 61352 Bad Homburg (DE)
(74) Vertreter: Manitz Finsterwald Patent- und Rechtsanwaltspartnerschaft mbB

(56) Entgegenhaltungen:
- WO-A2-2005/017369
- DE-A1-102016 119 479
- US-A1- 2005 158 143

## Beschreibung

Die Erfindung betrifft ein selbststanzendes Funktionselement zur Befestigung an einem Werkstück, nämlich an einem hochfesten Blechteil, ein Zusammenbauteil, das ein Werkstück und ein Funktionselement umfasst, und ein Verfahren zur Herstellung eines Zusammenbauteils.

Derartige Funktionselemente weisen in der Regel einen Funktionsabschnitt auf, der wiederum zur Befestigung weiterer Komponenten dient. Sie finden unter anderem im Automobilbau eine breite Anwendung.

Bei Funktionselementen kann es sich um Bolzenelemente, deren Schaft mit einem Gewinde versehen sein kann, oder um Mutterelemente handeln, die zum Beispiel ein Innengewinde aufweisen.

Funktionselemente sind in verschiedenen Ausführungen bekannt. Einerseits gibt es beispielsweise Nietelemente, die einen Nietabschnitt aufweisen, welcher bei der Anbringung an einem Blechteil verformt wird, um einen Nietbördel auszubilden und mit dem Kopfteil eine ringförmige Aufnahme für den Rand eines Lochs im Blechteil zu bilden. Bei solchen Nietelementen wird also das Funktionselement bei der Anbringung an das Blechteil verformt. Ferner sind Einpresselemente bekannt, bei denen das Element selbst bei der Anbringung an ein Blechteil nicht absichtlich verformt wird, sondern das Blechmaterial selbst wird verformt, um dieses in Eingriff mit Hinterschneidungen des jeweiligen Einpresselements zu bringen.

Aus US 2005/0158143 A1 ist ein Befestigungselement bekannt, welches selbststanzend ist und zugleich als Nietelement an einem regulären Blechteil befestigt werden kann. Dazu weist das Befestigungselement einen Stanz- und Nietabschnitt auf, an dessen freiem Ende radial innen eine Stanzkante vorgesehen ist.

Um Verbindungen zwischen einem Funktionselement und einem Werkstück herzustellen, wird häufig, insbesondere wenn es sich bei dem Werkstück um ein hochfestes Blechteil handelt, auf Schweißverbindungen zurückgegriffen. Als "hochfest" werden Werkstücke (Blechteile) bezeichnet, welche eine Festigkeit von mehr als 1200 MPa, insbesondere etwa 1500 MPa bis 1900 MPa aufweisen und in der Regel aus hochfestem Stahl bestehen. Hochfester Stahl ist jedoch schlecht schweißbar.

Alternativ zum Schweißen können Funktionselemente während des Presshärtens in die Werkstücke eingesetzt werden. Dies bedingt jedoch einen sehr hohen werkzeugtechnischen Aufwand und eine homogene Temperierung des Werkstücks.

Es ist eine Aufgabe der vorliegenden Erfindung, ein Funktionselement und ein Zusammenbauteil bereitzustellen, welche eine sichere und stabile Verbindung bei geringem Aufwand und für verschiedene Werkstückdicken ermöglichen.

Diese Aufgabe wird durch den Gegenstand der unabhängigen Ansprüche gelöst. Vorteilhafte Ausgestaltungen sind Gegenstand der Unteransprüche und sind in der Beschreibung und den Zeichnungen angegeben.

Ein selbststanzendes Funktionselement gemäß einem ersten Aspekt der Erfindung ist zur Befestigung an einem Werkstück, nämlich an einem hochfesten Blechteil, geeignet und umfasst einen Funktionsabschnitt und einen Befestigungsabschnitt, der eine Anpressfläche zum Angriff einer Setzeinrichtung, eine der Anpressfläche abgewandte Stirnfläche, die ringförmig ausgebildet ist, und eine die Anpressfläche und die Stirnfläche verbindende Außenumfangsfläche aufweist. Die Stirnfläche ist radial außen durch eine Stanzkante zum Ausstanzen eines Butzens aus dem Werkstück begrenzt. An der Außenumfangsfläche ist benachbart zu der Anpressfläche zumindest ein Vorsprung vorgesehen, der sich von der Außenumfangsfläche in radialer Richtung erhebt und der sich in radialer Richtung weiter nach außen erstreckt als die Stanzkante. Die Breite des Stirnflächenrings ist größer als 70 % der axialen Erstreckung des Befestigungsabschnitts oder der axialen Erstreckung der Außenumfangsfläche.

Das erfindungsgemäße Funktionselement ist geeignet, in ein hochfestes Blechteil als Werkstück eingepresst zu werden. Da das Funktionselement mit einer Stanzkante versehen ist, ist das Vorlochen des Werkstücks obsolet. Beim Einpressen des Funktionselements in das Werkstück wird mittels der Stanzkante ein Butzen aus dem Werkstück herausgestanzt und das Funktionselement mittels des Befestigungsabschnitts in das so entstehende Stanzloch in dem Werkstück eingepresst. Der Vorsprung bewirkt dabei einen in axialer Richtung wirkenden Hinterschnitt, sodass das Funktionselement in dem Werkstück sicher gehalten ist.

Insbesondere kann es sich bei dem üblicherweise aus Stahl bestehenden Funktionselement um ein Bolzenelement oder um ein Mutterelement handeln. Dabei weist ein Schaft des Einpressbolzens vorzugsweise ein Außengewinde auf und bildet so den Funktionsabschnitt aus. Das Mutterelement hingegen weist vorzugsweise ein Innengewinde auf, welches den Funktionsabschnitt bildet. Anstelle der Gewinde können auch andere Merkmale vorgesehen sein, die zum Beispiel zur Befestigung einer weiteren Komponente oder zur Bereitstellung einer anderen Funktionalität geeignet sind. Der Funktionsabschnitt kann auch abschnittsweise oder vollständig als glatter Stift bzw. als glattes Loch ausgebildet sein. Der Befestigungsabschnitt ist der Abschnitt des Funktionselements, mit welchem das Funktionselement an dem Werkstück befestigt wird.

Bei dem Werkstück kann es sich insbesondere um ein hochfestes Werkstück, beispielsweise ein hochfestes Blechteil, aus hochfestem Stahl handeln. Das Werkstück kann eine Festigkeit von 1200 MPa oder mehr, 1500 MPa oder mehr oder 1800 MPa oder mehr aufweisen, insbesondere etwa 1500 MPa bis 1900 MPa. Die Festigkeit des Funktionselements beträgt üblicherweise maximal 1000 MPa oder maximal 900 MPa.

Zweckmäßigerweise ist der Vorsprung konusförmig und/oder weist, relativ zu einer Längsachse des Funktionselements gesehen, einen zumindest abschnittsweise gekrümmten und/oder schrägen Verlauf auf. Dadurch kann der Vorsprung so dimensioniert werden, dass das Einpressen nicht unnötig erschwert wird und dennoch bei anvisierter Einpresstiefe in das Werkstück die gewünschte Wirkung des erzeugten Hinterschnitts besteht.

Vorzugsweise ist eine maximale radiale Erstreckung des Vorsprungs benachbart zu oder angrenzend an einen Übergang zu der Anpressfläche angeordnet. So kann beispielsweise erzielt werden, dass die Anpressfläche nach dem Einpressen näherungsweise bündig mit einer Oberfläche des Werkstücks abschließt.

In vorteilhafter Ausgestaltung weist der Vorsprung eine axiale Erstreckung auf, die etwa 30 % bis 60 %, insbesondere etwa 35 % bis 45 %, einer axialen Erstreckung des Befestigungsabschnitts entspricht. Es ist festgestellt worden, dass dabei ein optimales Ergebnis erzielt werden kann, bei dem der Einpressvorgang nicht unnötig erschwert wird und dennoch ein sicherer Halt durch den Hinterschnitt erzielt wird.

Das selbststanzende Funktionselement kann ferner zumindest ein an der Außenumfangsfläche ausgebildetes Verdrehsicherungsmerkmal, das vorzugsweise als ein sich von der Außenumfangsfläche erhebender, in axialer Richtung erstreckender Steg ausgebildet ist, aufweisen. Das Verdrehsicherungsmerkmal wirkt nach dem Einpressen einem auf das Funktionselement wirkenden Drehmoment in Umfangsrichtung entgegen, beispielsweise wenn bei der Montage eines weiteren Bauteils ein Drehmoment über den Funktionsabschnitt eingebracht wird.

Vorzugsweise kann das Verdrehsicherungsmerkmal in den Vorsprung übergehen. Dabei kann eine radiale Erstreckung des Verdrehsicherungsmerkmals vorteilhaft im Wesentlichen einer maximalen radialen Erstreckung des Vorsprungs entsprechen. Ferner ist es möglich, dass das Verdrehsicherungsmerkmal an dem Vorsprung vorgesehen ist.

Zweckmäßigerweise können zum Erhöhen des Widerstands gegen ein Drehmoment in Umfangsrichtung des Funktionselements mehrere Verdrehsicherungsmerkmale vorgesehen sein, die in Umfangsrichtung an der Außenumfangsfläche verteilt, insbesondere gleichmäßig verteilt, angeordnet sind. Die Verdrehsicherungen können vorzugsweise parallel zueinander und/oder senkrecht zu der Umfangsrichtung ausgerichtet sein.

Die Anpressfläche kann vorzugsweise ringförmig ausgebildet sein. Bevorzugt ist die Breite des Stirnflächenrings größer als 80 % oder größer als 90 % der axialen Erstreckung des Befestigungsabschnitts oder der axialen Erstreckung der Außenumfangsfläche. Insbesondere kann die Breite des Stirnflächenrings auch der axialen Erstreckung entsprechen oder größer als diese sein, beispielsweise mehr als 100 %, mehr als 150 % oder mehr als 200 % der axialen Erstreckung betragen. Ein Außendurchmesser der Stanzkante (bei nicht kreisförmiger Ausgestaltung der maximale Außendurchmesser) beträgt vorzugsweise mehr als 300 %, mehr als 400 %, mehr als 500 % oder mehr als 600 % der axialen Erstreckung des Befestigungsabschnitts oder der axialen Erstreckung der Außenumfangsfläche.

Vorzugsweise weist die Stirnfläche eine insbesondere zentrisch angeordnete Vertiefung auf. Diese kommt einer Verdrängung von Material an der Stirnfläche zugute, welche insbesondere mittels eines Matrizenstempels bewirkt werden kann, um einen später noch näher beschriebenen zweiten Hinterschnitt zu erzeugen.

In vorteilhafter Ausgestaltung weisen der Befestigungsabschnitt und/oder die Stanzkante eine von einer Kreisform abweichende Geometrie auf. Insbesondere kommen eine polygonale, ovale oder quadratische Geometrie in Betracht. Eine solche Form bewirkt eine Verdrehsicherung des Befestigungsabschnitts in dem Werkstück in Umfangsrichtung, zusätzlich zu den oben beschriebenen Verdrehsicherungsmerkmalen oder als alleinige Verdrehsicherung.

Der Vorsprung kann insbesondere in Umfangsrichtung durchgehend sein, um einen möglichst effektiven Hinterschnitt zu erzielen und dadurch eine sichere Verbindung zwischen Werkstück und Funktionselement zu erzielen.

Alternativ dazu können zumindest zwei in Umfangsrichtung getrennt voneinander angeordnete Vorsprünge vorgesehen sein, wodurch nach dem Einpressen eine automatische Verdrehsicherung in Umfangsrichtung bewirkt wird. Beispielsweise können mehrere gleichmäßig verteilte Vorsprünge in Umfangsrichtung angeordnet sein, die im Querschnitt gleich oder unterschiedlich ausgebildet sein können.

Vorzugsweise ist der Funktionsabschnitt mit einem Gewinde oder einer Rasteinrichtung versehen. Wie bereits angedeutet, handelt es sich dabei in der Regel bei einem Bolzenelement um ein Außengewinde, allerdings ist auch denkbar, dass das Bolzenelement einen hohlen Schaft mit einem Innengewinde aufweist. Bei einem Mutterelement handelt es sich bei dem Gewinde um ein Innengewinde.

Gemäß einem weiteren Aspekt betrifft die Erfindung ein Zusammenbauteil, das ein Werkstück, insbesondere ein hochfestes Blechteil, mit einer ersten Oberfläche, einer der ersten Oberfläche gegenüberliegenden zweiten Oberfläche und einem Stanzloch, welches eine Innenumfangsfläche ausbildet, aufweist. Ein selbststanzendes Funktionselement gemäß zumindest einer der vorstehend beschriebenen Ausführungsformen ist unter Heraustrennen eines Stanzbutzens in das Stanzloch eingepresst, sodass die Außenumfangsfläche des Funktionselements die Innenumfangsfläche des Stanzlochs kontaktiert und der Vorsprung in die erste Oberfläche des Werkstücks eingreift oder mit dieser zusammenwirkt, sodass ein erster, in axialer Richtung wirkender Hinterschnitt bereitgestellt wird. Verdrängtes Material des Befestigungsabschnitts bildet einen das Werkstück an der zweiten Oberfläche umgreifenden zweiten Hinterschnitt aus, um das Funktionselement an dem Werkstück zu sichern.

Durch die zwei in axialer Richtung wirkenden Hinterschnitte wird ein sicherer Halt des Funktionselements in dem Blechteil erzielt, wobei auf ein Vorlochen des Werkstücks verzichtet werden kann. Das Bilden des zweiten Hinterschnitts ist dabei erst nach dem Einpressen möglich, insbesondere mittels eines Matrizenstempels, wodurch ein großer Bereich von möglichen Werkstückdicken abgedeckt werden kann.

In vorteilhafter Ausgestaltung ist die Anpressfläche mit der ersten Oberfläche etwa bündig ausgerichtet.

Der Befestigungsabschnitt kann an der Stirnfläche eine Einsenkung aufweisen, von der sich der zweite Hinterschnitt in radialer Richtung nach außen erstreckt. Die Einsenkung wird insbesondere durch Angriff eines Werkzeugs, beispielsweise des Matrizenstempels, an der Stirnfläche erzeugt, sodass von dort aus das Material des Befestigungsabschnitts radial nach außen verdrängt wird, um den zweiten Hinterschnitt zu bilden.

Um den zweiten Hinterschnitt bilden zu können, weist der Befestigungsabschnitt vorteilhaft eine axiale Erstreckung auf, die größer ist als die Dicke des Werkstücks.

Gemäß einem weiteren Aspekt betrifft die Erfindung ein Verfahren zur Herstellung des Zusammenbauteils, umfassend die Schritte:
- Bereitstellen eines erfindungsgemäßen selbststanzenden Funktionselements,
- Bereitstellen eines Werkstücks, insbesondere eines hochfesten Blechteils, das zumindest in einem Bereich, der zur Befestigung des Funktionselements vorgesehen ist, nicht vorgelocht ist,
- Pressen der Stirnfläche des Funktionselements gegen das Werkstück, sodass durch die Stanzkante unter Bildung eines Stanzlochs ein Stanzbutzen aus dem Werkstück herausgetrennt wird, wobei das Funktionselement zumindest so lange in das Werkstück eingepresst wird, bis der Vorsprung in Eingriff mit der ersten

Oberfläche des Werkstücks und/oder der Innenumfangsfläche des Stanzlochs gelangt, um den ersten Hinterschnitt zu bilden,
- Umformen des Befestigungsabschnitts zumindest in einem Bereich benachbart zu der Stanzkante zur Bildung des zweiten Hinterschnitts, insbesondere unter Eingriff in die Stirnfläche.

Zweckmäßigerweise kann das Funktionselement durch eine Setzeinrichtung gegen das Werkstück gepresst werden, die auf die Anpressfläche des Funktionselements wirkt.

Ferner kann vorzugsweise ein Niederhalter vorgesehen sein, durch den die zweite Oberfläche des Werkstücks gegen eine Anlagefläche einer Matrize gepresst wird, um das Werkstück während des Pressvorgangs sicher zu halten.

Vorzugsweise ist ein Matrizenstempel vorgesehen, der zur Umformung des Befestigungsabschnitts gegen die Stirnfläche des Befestigungsabschnitts gepresst wird.

Es kann ein weiterer Niederhalter vorgesehen sein, der das Funktionselement während des Anpressens des Matrizenstempels in axialer Richtung festlegt. Beispielsweise greift der Niederhalter an der Anpressfläche an. Auch die Setzeinrichtung kann als Niederhalter fungieren, zum Beispiel wenn das Umformen gleich nach dem Einpressen stattfindet.

Der Matrizenstempel weist vorzugsweise eine Umformfläche auf, die von der Stirnfläche aus gesehen divergiert, um Material des Befestigungsabschnitts nach radial außen zu drängen und so den zweiten Hinterschnitt zu bilden.

Die Erfindung wird nachfolgend anhand von vorteilhaften Ausführungsformen rein beispielhaft erläutert. In den Zeichnungen, die die Ausführungsformen schematisch veranschaulichen, zeigt
- Fig. 1a: eine perspektivische Ansicht eines als Bolzenelement ausgebildeten Funktionselements gemäß einem Ausführungsbeispiel,
- Fig. 1b: eine weitere perspektivische Ansicht des Funktionselements aus Fig. 1,
- Fig. 2: eine perspektivische Ansicht eines als Mutterelement ausgebildeten Funktionselements gemäß einem Ausführungsbeispiel,
- Fig. 3: eine Querschnittsansicht eines Funktionselements und eines Werkstücks während eines Verfahrensschritts zur Herstellung eines Zusammenbauteils, in dem das Funktionselement durch eine Setzeinrichtung gegen das Werkstück gepresst wird,
- Fig. 4: eine Querschnittsansicht eines Funktionselements und eines Werkstücks während eines weiteren Verfahrensschritts, in dem durch Pressen des Funktionselements gegen das Werkstück ein Stanzloch gebildet und ein Stanzbutzen aus dem Werkstück herausgetrennt wird,
- Fig. 5: eine Querschnittsansicht eines Funktionselements und eines Werkstücks während eines weiteren Verfahrensschritts, in dem ein Matrizenstempel an der Stirnfläche des Befestigungsabschnitts angreift, und
- Fig. 6: eine Querschnittsansicht eines Funktionselements und eines Werkstücks während eines weiteren Verfahrensschritts, in dem mittels des Matrizenstempels ein Hinterschnitt an dem Befestigungsabschnitt gebildet wird.

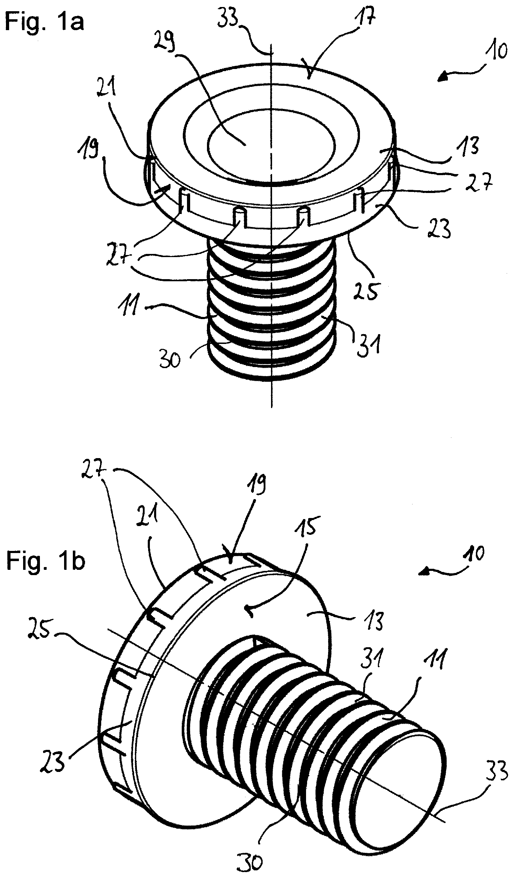

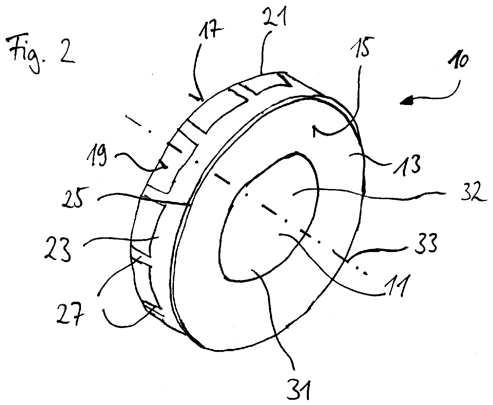

Fig. 1a und 1b zeigen jeweils ein als Bolzenelement ausgebildetes Funktionselement 10, und Fig. 2 zeigt ein als Mutterelement ausgebildetes Funktionselement 10.

Die Funktionselemente 10 umfassen jeweils einen Funktionsabschnitt 11 und einen Befestigungsabschnitt 13. Der Funktionsabschnitt 11 weist im Fall des als Bolzenelements ausgebildeten Funktionselements 10 gemäß Fig. 1a und 1b einen Schaft 30 auf, welcher mit einem Außengewinde 31 versehen ist. Das als Mutterelement ausgebildete Funktionselement 10 gemäß Fig. 2 hingegen weist eine zentrische Öffnung 32 auf, die mit einem nicht näher dargestellten Innengewinde 31 versehen ist.

Der Befestigungsabschnitt 13 ist mit einer Anpressfläche 15 und einer Stirnfläche 17 versehen, die der Anpressfläche 15 abgewandt ist und eine zentrisch angeordnete Vertiefung 29 aufweist. Die Anpressfläche 15 ist mittels eines Übergangs 25 mit einer Außenumfangsfläche 19 verbunden, die die Anpressfläche 15 und die Stirnfläche 17 miteinander verbindet. In einem Übergangsbereich von der Außenumfangsfläche 19 zu der Stirnfläche 17 ist der Befestigungsabschnitt 13 mit einer umlaufenden, im vorliegenden Beispiel kreisrunden Stanzkante 21 versehen.

Das Funktionselement 10 weist ferner benachbart zu der Anpressfläche 15 einen im vorliegenden Beispiel umlaufenden Vorsprung 23 auf, der radial von der Außenumfangsfläche 19 weg ragt und sich in radialer Richtung weiter nach außen erstreckt als die Stanzkante 21. Der Vorsprung 23 ist bei den vorliegenden Ausführungsformen konusförmig ausgebildet, wobei sich der Punkt der maximalen radialen Erstreckung des Vorsprungs 23 am Übergang 25 befindet.

Der Befestigungsabschnitt 13 ist zudem mit mehreren Verdrehsicherungsmerkmalen 27 versehen, welche sich von der Außenumfangsfläche 19 abheben und an ihrem der Anpressfläche 15 zugewandten Ende in den Vorsprung 23 übergehen. Das heißt, die radiale Erstreckung der Verdrehsicherungsmerkmale 27 entspricht der maximalen radialen Erstreckung des Vorsprungs 23. Die Verdrehsicherungsmerkmale 27 sind als parallel zur Längsachse 33 des Funktionselements 10 verlaufende Stege oder Rippen ausgebildet, die entlang der Außenumfangsfläche 19 in gleichen Abständen zueinander angeordnet sind.

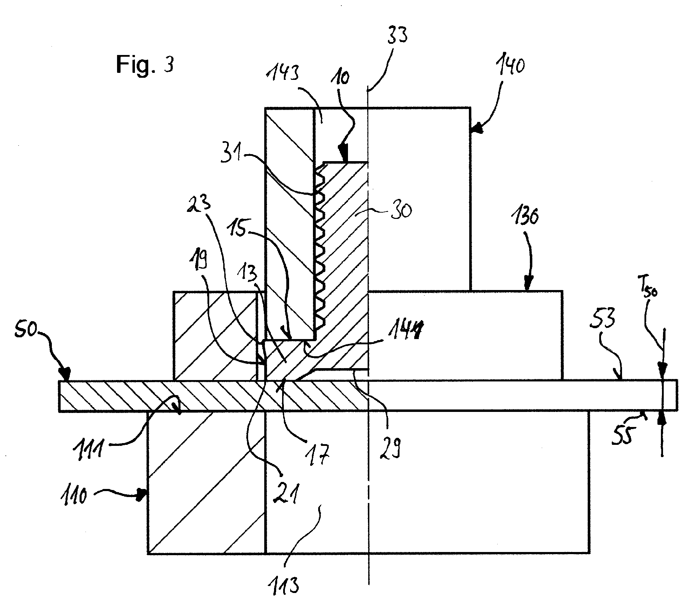

Ein Verfahren zum Herstellen eines Zusammenbauteils 100 wird nachfolgend insbesondere mit Blick auf Fig. 3 bis 6 und unter beispielhafter Verwendung des Funktionselements 10 aus Fig. 1a und 1b beschrieben.

Zunächst werden das selbststanzende Funktionselement 10 und ein Werkstück 50, im vorliegenden Beispiel ein hochfestes Blechteil, bereitgestellt. Wie Fig. 3 anschaulich zeigt, weist das Werkstück 50 eine erste Oberfläche 53 und eine der ersten Oberfläche 53 gegenüberliegende zweite Oberfläche 55 auf und ist, jedenfalls in dem Bereich, in den das Funktionselement 10 eingebracht werden soll, nicht vorgelocht. Eine axiale Erstreckung des Befestigungsabschnitts 13 ist dabei größer als die Dicke T₅₀ des Werkstücks 50.

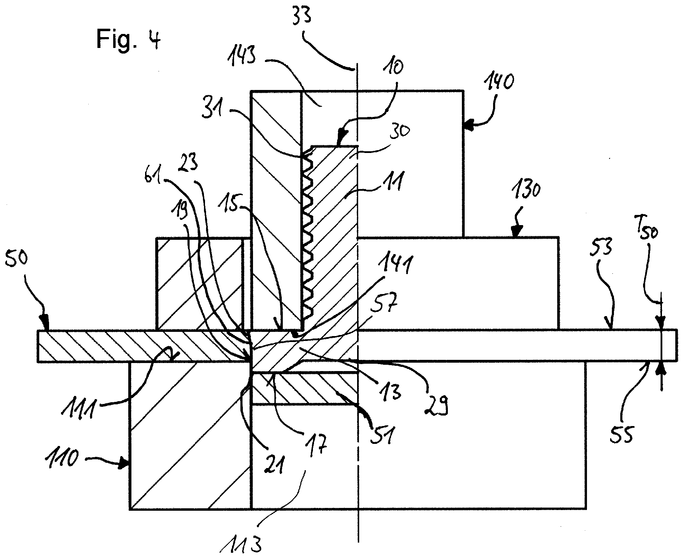

Zum genauen Positionieren und zum sicheren Halten des Werkstücks 50 während der Verfahrensschritte wird das Werkstück 50 mit der zweiten Oberfläche 55 zunächst auf einer Matrize 110 platziert, sodass die zweite Oberfläche 55 auf einer Anlagefläche 111 der Matrize 110 aufliegt. Die Matrize 110 kann insbesondere eine mittige Ausnehmung 113 aufweisen, welche zumindest so groß ist, dass ein beim Stanzen herausgetrennter Butzen 51, siehe Fig. 4, durch die Ausnehmung 113 hindurchfallen kann. Das Werkstück 50 wird dazu mit dem Bereich, in dem das Funktionselement 10 angebracht werden soll, zu der Ausnehmung 113 ausgerichtet.

Mittels eines Niederhalters 130 wird das Werkstück 50 auf die Anlagefläche 111 der Matrize 110 gepresst, indem der Niederhalter 130 an der ersten Oberfläche 53 angreift. Das Werkstück 50 wird dadurch sicher auf der Matrize 110 gehalten, um ein Verrutschen während des Pressens zu vermeiden.

Sodann wird das Funktionselement 10 durch eine mit einer Kontaktfläche 141 auf die Anpressfläche 15 wirkende Setzeinrichtung 140 so auf das Werkstück 50 gepresst, dass die Stirnfläche 17 des Funktionselements 10 gegen die erste Oberfläche 53 des Werkstücks 50 gepresst wird und dadurch die Stanzkante 21 in Verbindung mit der wirkenden Presskraft ein Stanzloch 57 in dem Werkstück 50 bildet, wobei, wie Fig. 4 zeigt, ein Stanzbutzen 51 herausgetrennt wird.

Im vorliegenden Beispiel findet der Pressvorgang, wie Fig. 4 bis 6 zeigen, zumindest so lange statt, bis der Vorsprung 23 in Eingriff mit der ersten Oberfläche 53 des Werkstücks 50 und einer Innenumfangsfläche 59 des Stanzlochs 57 gelangt. Der Vorsprung 23 bildet dabei einen in axialer Richtung wirkenden ersten Hinterschnitt 61.

Die Setzeinrichtung 140 ist mit einer zentrischen Ausnehmung 143 versehen, welche insbesondere so groß ist, dass der Schaft 30 des Funktionselements 10 gerade in ihr Platz findet und in der Ausnehmung 143 aufgenommen werden kann. Beispielsweise kann die Ausnehmung 143 als Bohrung ausgestaltet sein, sodass die Setzeinrichtung 140 einen, wie im vorliegenden Beispiel, gegebenenfalls mit Gewinde 31 versehenen, aber in der Grundform zylindrischen Schaft 30 aufnehmen kann. In diesem Fall sind sowohl die Kontaktfläche 141 als auch die Anpressfläche 15 ringförmig gestaltet, wobei eine gleichmäßig auf das Funktionselement 10 wirkende Krafteinleitung erzielt werden kann.

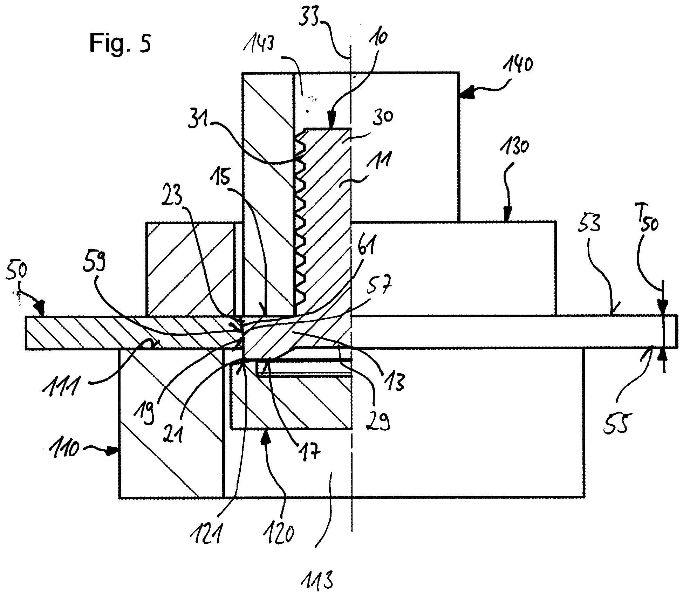

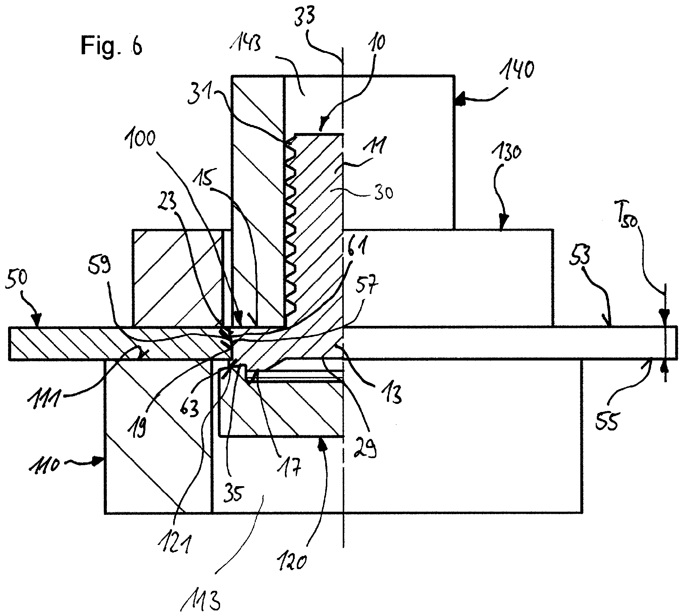

Wie in Fig. 5 und 6 anschaulich gezeigt, wird in einem nächsten Schritt der Befestigungsabschnitt 13 zumindest in einem Bereich benachbart zu der Stanzkante 21 zur Bildung eines zweiten Hinterschnitts 63 umgeformt. Dies geschieht im vorliegenden Ausführungsbeispiel mittels eines Matrizenstempels 120, der eine von der Stirnfläche 17 aus gesehen divergierende Umformfläche 121 aufweist und der gegen die Stirnfläche 17 des Befestigungsabschnitts 13 gepresst wird. Dabei wird Material des Befestigungsabschnitts 13 radial nach außen gedrängt, sodass der ebenfalls in axialer Richtung wirkende zweite Hinterschnitt 63 entsteht.

Bevorzugt finden das Einpressen des Funktionselements 10 und das Bilden des zweiten Hinterschnitts 63 direkt aneinander anschließend statt. Jedoch ist es auch möglich, diese beiden Vorgänge in unterschiedlichen Werkzeugen umzusetzen, wobei das Funktionselement 10 mit dem Werkstück 50 nach dem Einpressen des Funktionselements 10 dem ersten Werkzeug entnommen werden und zu dem zweiten Werkzeug transportiert werden. In diesem wird dann der zweite Hinterschnitt 63 gebildet. Hier kann ebenfalls ein Niederhalter zum Einsatz gelangen.

Beispielsweise ist dieser so ausgestaltet, dass er gleichzeitig das Werkstück 50 und das Element 10 in axialer Richtung festlegt.

Bei dem so hergestellten Zusammenbauteil 100 kontaktiert die Außenumfangsfläche 19 des Funktionselements 10 die Innenumfangsfläche 59 des Stanzlochs 57. Die Anpressfläche 15 ist mit der ersten Oberfläche 53 des Werkstücks 50 in etwa bündig ausgerichtet, und der Vorsprung 23 greift in das Material des Werkstücks 50 und in die erste Oberfläche 53 ein und wirkt mit dieser zusammen, wobei der in axialer Richtung wirkende erste Hinterschnitt 61 gebildet wird. Das mittels des Matrizenstempels 120 verdrängte Material des Befestigungsabschnitts 13 bildet den zweiten Hinterschnitt 63, der sich von einer an der Stirnfläche 17 ausgebildeten und durch das Angreifen der Umformfläche 121 des Matrizenstempels 120 erzeugten Einsenkung 35 radial nach außen erstreckt und die das Werkstück 50 hintergreift.

Mit dem hier gezeigten Funktionselement 10 und dem Zusammenbauteil 100 kann somit eine sichere und stabile Verbindung zwischen Funktionselement 10 und Werkstück 50, insbesondere einem hochfesten Blechteil, hergestellt werden. Da das Werkstück 50 nicht vorgelocht werden muss und ein aufwendiges Schweißverfahren obsolet ist, ist dies bei vergleichsweise geringem Aufwand möglich. Zudem lässt sich das Zusammenbauteil 100 bei einem breiten Anwendungsbereich von Dicken des Werkstücks 50 herstellen.

### Bezugszeichenliste

- 10: Funktionselement
- 11: Funktionsabschnitt
- 13: Befestigungsabschnitt
- 15: Anpressfläche
- 17: Stirnfläche
- 19: Außenumfangsfläche
- 21: Stanzkante
- 23: Vorsprung
- 25: Übergang
- 27: Verdrehsicherungsmerkmal
- 29: Vertiefung
- 30: Schaft
- 31: Gewinde
- 32: Öffnung
- 33: Längsachse
- 35: Einsenkung
- 50: Werkstück
- 51: Butzen
- 53: erste Oberfläche
- 55: zweite Oberfläche
- 57: Stanzloch
- 59: Innenumfangsfläche
- 61: erster Hinterschnitt
- 63: zweiter Hinterschnitt
- 100: Zusammenbauteil
- 110: Matrize
- 111: Anlagefläche der Matrize
- 113: Ausnehmung
- 120: Matrizenstempel
- 121: Umformfläche
- 130: Niederhalter
- 140: Setzeinrichtung
- 141: Kontaktfläche
- 143: Ausnehmung

- T₅₀: Dicke des Werkstücks

## Patentansprüche

1. Selbststanzendes Funktionselement (10) zur Befestigung an einem Werkstück (50), nämlich an einem hochfesten Blechteil, umfassend
einen Funktionsabschnitt (11) und
einen Befestigungsabschnitt (13), der
eine Anpressfläche (15) zum Angriff einer Setzeinrichtung (140),
eine der Anpressfläche (15) abgewandte Stirnfläche (17), die ringförmig ausgebildet ist, und
eine die Anpressfläche (15) und die Stirnfläche (17) verbindende Außenumfangsfläche (19) aufweist,
wobei an der Außenumfangsfläche (19) benachbart zu der Anpressfläche (15) zumindest ein Vorsprung (23) vorgesehen ist, der sich von der Außenumfangsfläche (19) in radialer Richtung erhebt,
**dadurch gekennzeichnet, dass** die Stirnfläche (17) radial außen durch eine Stanzkante (21) zum Ausstanzen eines Butzens (51) aus dem Werkstück (50) begrenzt ist, dass sich der Vorsprung (23) in radialer Richtung weiter nach außen erstreckt als die Stanzkante (21) und dass die Breite des Stirnflächenrings größer als 70 % der axialen Erstreckung des Befestigungsabschnitts (13) oder der axialen Erstreckung der Außenumfangsfläche (19) ist.

2. Selbststanzendes Funktionselement (10) nach Anspruch 1,
**dadurch gekennzeichnet, dass**
der Vorsprung (23) konusförmig ist und/oder, relativ zu einer Längsachse (33) des Funktionselements (10) gesehen, einen zumindest abschnittsweise gekrümmten und/oder schrägen Verlauf aufweist.

3. Selbststanzendes Funktionselement (10) nach Anspruch 1 oder 2,
**dadurch gekennzeichnet, dass**
eine maximale radiale Erstreckung des Vorsprungs (23) benachbart zu oder angrenzend an einen Übergang (25) zu der Anpressfläche (15) angeordnet ist.

4. Selbststanzendes Funktionselement (10) nach einem der Ansprüche 1 bis 3,
**dadurch gekennzeichnet, dass**
der Vorsprung (23) eine axiale Erstreckung aufweist, die etwa 30 % bis 60 %, insbesondere etwa 35 % bis 45 %, einer axialen Erstreckung des Befestigungsabschnitts (13) entspricht.

5. Selbststanzendes Funktionselement (10) nach einem der Ansprüche 1 bis 4,
**gekennzeichnet durch**
zumindest ein an der Außenumfangsfläche (19) ausgebildetes Verdrehsicherungsmerkmal (27), das vorzugsweise als ein sich von der Außenumfangsfläche (19) erhebender, in axialer Richtung erstreckender Steg ausgebildet ist, insbesondere wobei eine radiale Erstreckung des Verdrehsicherungsmerkmals (27) im Wesentlichen einer maximalen radialen Erstreckung des Vorsprungs (23) entspricht.

6. Selbststanzendes Funktionselement (10) nach einem der Ansprüche 1 bis 5,
**dadurch gekennzeichnet, dass**
die Anpressfläche (15) ringförmig ausgebildet ist und/oder dass die Stirnfläche (17) eine insbesondere zentrisch angeordnete Vertiefung (29) aufweist.

7. Selbststanzendes Funktionselement (10) nach einem der Ansprüche 1 bis 6,
**dadurch gekennzeichnet, dass**
die Breite des Stirnflächenrings größer als 80 % oder größer als 90 % der axialen Erstreckung des Befestigungsabschnitts (13) oder der axialen Erstreckung der Außenumfangsfläche (19) ist.

8. Selbststanzendes Funktionselement (10) nach einem der Ansprüche 1 bis 7,
**dadurch gekennzeichnet, dass**
der Vorsprung (23) in Umfangsrichtung durchgehend ist und/oder dass zumindest zwei in Umfangsrichtung getrennt voneinander angeordnete Vorsprünge (23) vorgesehen sind.

9. Selbststanzendes Funktionselement (10) nach einem der Ansprüche 1 bis 8,
**dadurch gekennzeichnet, dass**
der Funktionsabschnitt (11) mit einem Gewinde (31) oder einer Rasteinrichtung versehen ist und/oder dass das Funktionselement (10) ein Bolzenelement oder ein Mutterelement ist.

10. Zusammenbauteil (100), das ein Werkstück (50), insbesondere ein hochfestes Blechteil, mit einer ersten Oberfläche (53), einer der ersten Oberfläche (53) gegenüberliegenden zweiten Oberfläche (55) und einem Stanzloch (57), welches eine Innenumfangsfläche (59) ausbildet, aufweist, wobei ein selbststanzendes Funktionselement (10) nach einem der Ansprüche 1 bis 9 unter Heraustrennen eines Stanzbutzens (51) in das Stanzloch (57) eingepresst ist, sodass die Außenumfangsfläche (19) des Funktionselements (10) die Innenumfangsfläche (59) des Stanzlochs (57) kontaktiert und der Vorsprung (23) in die erste Oberfläche (53) des Werkstücks (50) eingreift oder mit dieser zusammenwirkt, sodass ein erster, in axialer Richtung wirkender Hinterschnitt (61) bereitgestellt wird, wobei verdrängtes Material des Befestigungsabschnitts (13) einen das Werkstück (50) an der zweiten Oberfläche (55) umgreifenden zweiten Hinterschnitt (63) ausbildet, um das Funktionselement (10) an dem Werkstück (50) zu sichern.

11. Zusammenbauteil (100) nach Anspruch 10,
**dadurch gekennzeichnet, dass**
die Anpressfläche (15) mit der ersten Oberfläche (53) etwa bündig ausgerichtet ist.

12. Zusammenbauteil (100) nach Anspruch 10 oder 11,
**dadurch gekennzeichnet, dass**
der Befestigungsabschnitt (13) an der Stirnfläche (17) eine Einsenkung (35) aufweist, von der sich der zweite Hinterschnitt (63) in radialer Richtung nach außen erstreckt.

13. Zusammenbauteil (100) nach einem der Ansprüche 10 bis 12,
**dadurch gekennzeichnet, dass**
der Befestigungsabschnitt (13) eine axiale Erstreckung aufweist, die größer ist als die Dicke (T₅₀) des Werkstücks (50).

14. Verfahren zur Herstellung eines Zusammenbauteils (100) nach einem der Ansprüche 10 bis 13, umfassend die Schritte:
- Bereitstellen eines selbststanzenden Funktionselements (10) nach zumindest einem der Ansprüche 1 bis 9,
- Bereitstellen eines Werkstücks (50), insbesondere eines hochfesten Blechteils, das zumindest in einem Bereich, der zur Befestigung des Funktionselements (10) vorgesehen ist, nicht vorgelocht ist,
- Pressen der Stirnfläche (17) des Funktionselements (10) gegen das Werkstück (50), sodass durch die Stanzkante (21) unter Bildung eines Stanzlochs (57) ein Stanzbutzen (51) aus dem Werkstück (50) herausgetrennt wird, wobei das Funktionselement (10) zumindest so lange in das Werkstück (50) eingepresst wird, bis der Vorsprung (23) in Eingriff mit der ersten Oberfläche (53) des Werkstücks (50) und/oder der Innenumfangsfläche (59) des Stanzlochs (57) gelangt, um den ersten Hinterschnitt (61) zu bilden,
- Umformen des Befestigungsabschnitts (13) zumindest in einem Bereich benachbart zu der Stanzkante (21) zur Bildung des zweiten Hinterschnitts (63), insbesondere wobei ein Matrizenstempel (120) vorgesehen ist, der zur Umformung des Befestigungsabschnitts (13) gegen die Stirnfläche (17) des Befestigungsabschnitts (13) gepresst wird.

15. Verfahren nach Anspruch 14,
**dadurch gekennzeichnet, dass**
das Funktionselement (10) durch eine Setzeinrichtung (140) gegen das Werkstück (50) gepresst wird, die auf die Anpressfläche (15) des Funktionselements (10) wirkt und/oder dass ein Niederhalter (130) vorgesehen ist,
durch den die zweite Oberfläche (55) des Werkstücks (50) gegen eine Anlagefläche (111) einer Matrize (110) gepresst wird.

16. Verfahren nach einem der Ansprüche 14 bis 15,
**dadurch gekennzeichnet, dass**
der Matrizenstempel (120) eine Umformfläche (121) aufweist, die von der Stirnfläche (17) aus gesehen divergiert, um Material des Befestigungsabschnitts (13) nach radial außen zu drängen und so den zweiten Hinterschnitt (63) zu bilden.

## Claims

1. A self-punching functional element (10) for fastening to a workpiece (50), namely to a high-strength sheet metal part, said self-punching functional element (10) comprising
a functional section (11); and
a fastening section (13) which has
a contact surface (15) for an engagement of a setting device (140),
an end face (17) which is remote from the contact surface (15) and which is ring-shaped, and
an outer peripheral surface (19) connecting the contact surface (15) and the end face (17),
wherein at least one projection (23) is provided at the outer peripheral surface (19) adjacent to the contact surface (15) and rises from the outer peripheral surface (19) in a radial direction,
**characterized in that** the end face (17) is radially outwardly bounded by a punching edge (21) for punching a slug (51) out of the workpiece (50), **in that** the projection (23) extends further outwardly in the radial direction than the punching edge (21), and **in that** the width of the end face ring is greater than 70% of the axial extent of the fastening section (13) or of the axial extent of the outer peripheral surface (19).

2. A self-punching functional element (10) according to claim 1,
**characterized in that**
the projection (23) is conical and/or, viewed relative to a longitudinal axis (33) of the functional element (10), has an at least sectionally curved and/or slanted course.

3. A self-punching fastening element (10) according to claim 1 or 2,
**characterized in that**
a maximum radial extent of the projection (23) is arranged adjacent to or adjoining a transition (25) to the contact surface (15).

4. A self-punching functional element (10) according to any one of the claims 1 to 3,
**characterized in that**
the projection (23) has an axial extent which corresponds to approximately 30% to 60%, in particular approximately 35% to 45%, of an axial extent of the fastening section (13).

5. A self-punching functional element (10) according to any one of the claims 1 to 4,
**characterized by**
at least one feature providing security against rotation (27) which is formed at the outer peripheral surface (19) and which is preferably configured as a web which rises from the outer peripheral surface (19) and which extends in an axial direction, in particular wherein a radial extent of the feature providing security against rotation (27) substantially corresponds to a maximum radial extent of the projection (23).

6. A self-punching fastening element (10) according to any one of the claims 1 to 5,
**characterized in that**
the contact surface (15) is ring-shaped, and/or **in that** the end face (17) has a recess (29) which is in particular centrally arranged.

7. A self-punching fastening element (10) according to any one of the claims 1 to 6,
**characterized in that**
the width of the end face ring is greater than 80% or greater than 90% of the axial extent of the fastening section (13) or of the axial extent of the outer peripheral surface (19).

8. A self-punching fastening element (10) according to any one of the claims 1 to 7,
**characterized in that**
the projection (23) is continuous in the peripheral direction, and/or **in that** at least two projections (23) arranged separately from one another in the peripheral direction are provided.

9. A self-punching functional element (10) according to any one of the claims 1 to 8,
**characterized in that**
the functional section (11) is provided with a thread (31) or a latch device, and/or **in that** the functional element (10) is a bolt element or a nut element.

10. A component assembly (100) which has a workpiece (50), in particular a high-strength sheet metal part, having a first surface (53), a second surface (55) disposed opposite the first surface (53), and a punched hole (57) which forms an inner peripheral surface (59), wherein a self-punching functional element (10) according to any one of the claims 1 to 9 is pressed into the punched hole (57) while separating a punching slug (51) such that the outer peripheral surface (19) of the functional element (10) contacts the inner peripheral surface (59) of the punched hole (57) and the projection (23) engages into the first surface (53) of the workpiece (50) or cooperates therewith such that a first undercut (61) acting in the axial direction is provided, wherein displaced material of the fastening section (13) forms a second undercut (63) engaging around the workpiece (50) at the second surface (55) to secure the functional element (10) to the workpiece (50).

11. A component assembly according to claim 10,
**characterized in that**
the contact surface (15) is aligned approximately flush with the first surface (53).

12. A component assembly (100) according to claim 10 or 11,
**characterized in that**
the fastening section (13) has, at the end face (17), a depression (35) from which the second undercut (63) extends outwardly in the radial direction.

13. A component assembly (100) according to any one of the claims 10 to 12, **characterized in that**
the fastening section (13) has an axial extent which is greater than the thickness (T₅₀) of the workpiece (50).

14. A method of manufacturing a component assembly (100) according to any one of the claims 10 to 13, comprising the steps:
- providing a self-punching functional element (10) according to at least one of the claims 1 to 9;
- providing a workpiece (50), in particular a high-strength sheet metal part, which is not pre-punched at least in a region which is provided for fastening the functional element (10);
- pressing the end face (17) of the functional element (10) against the workpiece (50) such that a punched slug (51) is separated from the workpiece (50) by the punching edge (21) while forming a punched hole (57), wherein the functional element (10) is pressed into the workpiece (50) at least until the projection (23) enters into engagement with the first surface (53) of the workpiece (50) and/or with the inner peripheral surface (59) of the punched hole (57) to form the first undercut (61); and
- reshaping the fastening section (13) at least in a region adjacent to the punching edge (21) to form the second undercut (63), in particular wherein a die plunger (120) is provided which is pressed against the end face (17) of the fastening section (13) to reshape the fastening section (13).

15. A method according to claim 14,
**characterized in that**
the functional element (10) is pressed against the workpiece (50) by a setting device (140) which acts on the contact surface (15) of the functional element (10), and/or **in that** a downholder (130) is provided by which the second surface (55) of the workpiece (50) is pressed against a contact surface (111) of a die (110).

16. A method according to one of the claims 14 to 15,
**characterized in that**
the die plunger (120) has a reshaping surface (121) which diverges, viewed from the end face (17), to urge material of the fastening section (13) radially outwardly and to form the second undercut (63) in this manner.

## Revendications

1. Elément fonctionnel auto-poinçonneur (10) destiné à être fixé à une pièce à oeuvrer (50), à savoir à une pièce de tôle à haute résistance, comprenant
une portion fonctionnelle (11) et
une portion de fixation (13), présentant
une surface de pression (15) pour l'engagement d'un dispositif de pose (140),
une surface frontale (17) réalisée en forme annulaire, détournée de la surface de pression (15), et
une surface périphérique extérieure (19) reliant la surface de pression (15) et la surface frontale (17),
au moins une saillie (23) étant prévue sur la surface périphérique extérieure (19) au voisinage de la surface de pression (15), saillie qui s'élève de la surface périphérique extérieure (19) dans la direction radiale,
**caractérisé en ce que**
la surface frontale (17) est délimitée radialement à l'extérieur par une arête de poinçonnage (21) destinée à découper une pastille (51) dans la pièce à oeuvrer (50),
**en ce que** la saillie (23) s'étend plus loin vers l'extérieur dans la direction radiale que l'arête de poinçonnage (21), et
**en ce que** la largeur de l'anneau de surface frontale est supérieure à 70 % de l'extension axiale de la portion de fixation (13) ou de l'extension axiale de la surface périphérique extérieure (19).

2. Elément fonctionnel auto-poinçonneur (10) selon la revendication 1,
**caractérisé en ce que**
la saillie (23) est de forme conique et/ou, vue par rapport à un axe longitudinal (33) de l'élément fonctionnel (10), présente un tracé au moins localement incurvé et/ou oblique.

3. Elément fonctionnel auto-poinçonneur (10) selon la revendication 1 ou 2, **caractérisé en ce que**
une extension radiale maximale de la saillie (23) est disposée au voisinage ou de façon adjacente à une transition (25) vers la surface de pression (15).

4. Elément fonctionnel auto-poinçonneur (10) selon l'une des revendications 1 à 3,
**caractérisé en ce que**
la saillie (23) présente une extension axiale qui correspond à environ 30 % à 60 %, en particulier à environ 35 % à 45 %, d'une extension axiale de la portion de fixation (13).

5. Elément fonctionnel auto-poinçonneur (10) selon l'une des revendications 1 à 4,
**caractérisé par**
au moins une caractéristique anti-rotation (27) formée sur la surface périphérique extérieure (19), qui est de préférence réalisée sous la forme d'une nervure s'élevant de la surface périphérique extérieure (19) et s'étendant dans la direction axiale,
en particulier, une extension radiale de la caractéristique anti-rotation (27) correspond sensiblement à une extension radiale maximale de la saillie (23).

6. Elément fonctionnel auto-poinçonneur (10) selon l'une des revendications 1 à 5,
**caractérisé en ce que**
la surface de pression (15) est réalisée en forme annulaire, et/ou
**en ce que** la surface frontale (17) présente un renfoncement (29) disposé en particulier au centre.

7. Elément fonctionnel auto-poinçonneur (10) selon l'une des revendications 1 à 6,
**caractérisé en ce que**
la largeur de l'anneau de surface frontale est supérieure à 80 % ou supérieure à 90 % de l'extension axiale de la portion de fixation (13) ou de l'extension axiale de la surface périphérique extérieure (19).

8. Elément fonctionnel auto-poinçonneur (10) selon l'une des revendications 1 à 7,
**caractérisé en ce que**
la saillie (23) est continue dans la direction périphérique, et/ou **en ce qu'**il est prévu au moins deux saillies (23) disposées séparément l'une de l'autre dans la direction périphérique.

9. Elément fonctionnel auto-poinçonneur (10) selon l'une des revendications 1 à 8,
**caractérisé en ce que**
la portion fonctionnelle (11) est pourvue d'un pas de vis (31) ou d'un moyen d'enclenchement, et/ou
**en ce que** l'élément fonctionnel (10) est un élément formant boulon ou un élément formant écrou.

10. Pièce d'assemblage (100) comprenant une pièce à oeuvrer (50), en particulier une pièce en tôle à haute résistance, ayant une première surface (53), une deuxième surface (55) opposée à la première surface (53), et un trou de poinçonnage (57) qui forme une surface périphérique intérieure (59), dans laquelle un élément fonctionnel auto-poinçonneur (10) selon l'une des revendications 1 à 9 est enfoncé dans le trou de poinçonnage (57) en découpant une pastille de poinçonnage (51), de sorte que la surface périphérique extérieure (19) de l'élément fonctionnel (10) vient en contact avec la surface périphérique intérieure (59) du trou de poinçonnage (57) et que la saillie (23) s'engage dans la première surface (53) de la pièce à oeuvrer (50) ou coopère avec celle-ci, de manière à fournir une première contre-dépouille (61) agissant dans la direction axiale, le matériau déplacé de la portion de fixation (13) formant une deuxième contre-dépouille (63) entourant la pièce à oeuvrer (50) sur la deuxième surface (55), afin de fixer l'élément fonctionnel (10) à la pièce à oeuvrer (50).

11. Pièce d'assemblage (100) selon la revendication 10,
**caractérisée en ce que**
la surface de pression (15) est alignée approximativement à fleur avec la première surface (53).

12. Pièce d'assemblage (100) selon la revendication 10 ou 11,
**caractérisée en ce que**
la portion de fixation (13) présente, sur la surface frontale (17), une dépression (35) à partir de laquelle la deuxième contre-dépouille (63) s'étend vers l'extérieur dans la direction radiale.

13. Pièce d'assemblage (100) selon l'une des revendications 10 à 12,
**caractérisée en ce que**
la portion de fixation (13) présente une extension axiale supérieure à l'épaisseur (T₅₀) de la pièce à oeuvrer (50).

14. Procédé de fabrication d'une pièce d'assemblage (100) selon l'une des revendications 10 à 13, comprenant les étapes consistant à :
- fournir un élément fonctionnel auto-poinçonneur (10) selon l'une au moins des revendications 1 à 9,
- fournir une pièce à oeuvrer (50), en particulier une pièce de tôle à haute résistance, qui n'est pas pré-perforée au moins dans une zone prévue pour la fixation de l'élément fonctionnel (10),
- presser la surface frontale (17) de l'élément fonctionnel (10) contre la pièce à oeuvrer (50), de sorte qu'une pastille de poinçonnage (51) est découpée de la pièce à oeuvrer (50) par l'arête de poinçonnage (21) en formant un trou de poinçonnage (57), l'élément fonctionnel (10) étant enfoncé dans la pièce à oeuvrer (50) au moins jusqu'à ce que la saillie (23) vienne en engagement avec la première surface (53) de la pièce à oeuvrer (50) et/ou avec la surface périphérique intérieure (59) du trou de poinçonnage (57) pour former la première contre-dépouille (61),
- déformer la portion de fixation (13) au moins dans une zone voisine de l'arête de poinçonnage (21) pour former la deuxième contre-dépouille (63), en particulier, il est prévu un poinçon de matrice (120) qui est pressé contre la surface frontale (17) de la portion de fixation (13) pour déformer la portion de fixation (13).

15. Procédé selon la revendication 14,
**caractérisé en ce que**
l'élément fonctionnel (10) est pressé contre la pièce à oeuvrer (50) par un dispositif de pose (140) qui agit sur la surface de pression (15) de l'élément fonctionnel (10), et/ou
**en ce qu'**il est prévu un serre-flan (130) par lequel la deuxième surface (55) de la pièce à oeuvrer (50) est pressée contre une surface d'appui (111) d'une matrice (110).

16. Procédé selon l'une des revendications 14 à 15,
**caractérisé en ce que**
le poinçon de matrice (120) présente une surface de déformation (121) qui diverge par rapport à la surface frontale (17) afin de pousser le matériau de la portion de fixation (13) radialement vers l'extérieur et de former ainsi la deuxième contre-dépouille (63).
